# EUROPÄISCHE PATENTANMELDUNG

(11) **EP 4 265 353 A1**
(43) Veröffentlichungstag der Anmeldung: **25.10.2023**
(21) Anmeldenummer: 23167486.2
(22) Anmeldetag: 12.04.2023
(51) Int. Cl.: B22D 11/124, B22D 11/22

(54) **TESTSTAND FÜR EIN SEKUNDÄRKÜHLEN EINES GIESSSTRANGS IN EINER STRANGGIESSANLAGE**

(30) Priorität: 19.04.2022 AT 502562022
(71) Anmelder: Primetals Technologies Austria GmbH, 4031 Linz (AT)
(72) Erfinder: Kogler, Helmut, 4204 Reichenau i. M. (AT); Mittermair, Andreas, 4040 Linz (AT); Reisenberger, Ewald, 4040 Linz (AT); Stepanek, Thomas, 1100 Wien (AT); Hofmann, Bernhard, 4040 Linz (AT); Javurek, Mirko, 4030 Linz (AT)
(74) Vertreter: Metals@Linz

(57) **Zusammenfassung**

Die Erfindung betrifft einen Teststand (1) für ein Sekundärkühlen eines Gießstrangs in einer Stranggießanlage. Der Teststand (1) umfasst einen um eine Schwenkachse (5) schwenkbaren Schwenkrahmen (3) und wenigstens eine Düsenhalterung (11) für eine Kühldüse (13), die sowohl parallel zu der Schwenkachse (5) als auch in und entgegen einer Verschieberichtung (15) verschiebbar an dem Schwenkrahmen (3) angeordnet ist. Ferner umfasst der Teststand (1) einen linear verfahrbar an dem Schwenkrahmen (3) gelagerten Verfahrtisch (23) mit einer Tischoberfläche (29), die einen beheizbaren Heizbereich (31) aufweist. Jede Düsenhalterung (11) und der Verfahrtisch (23) sind derart relativ zueinander an dem Schwenkrahmen (3) angeordnet, dass der Heizbereich (31) durch Verfahren des Verfahrtisches (23) durch einen Wirkbereich führbar ist, in den ein Kühlmittel von einer in der Düsenhalterung (11) in einer Prüfposition angeordneten Kühldüse (13) ausgebbar ist.

## Beschreibung

Die Erfindung betrifft einen Teststand für ein Sekundärkühlen eines Gießstrangs in einer Stranggießanlage. Genauer betrifft die Erfindung einen Teststand zum Ermitteln einer Kühlwirkung von Kühldüsen beim Sekundärkühlen eines Gießstrangs in einer Stranggießanlage.

In einer Stranggießanlage wird eine metallische Schmelze in eine gekühlte Kokille, in der die Erstarrung der Schmelze beginnt, gegossen. Innerhalb der Kokille erstarren Oberflächenbereiche der Schmelze zu einer Strangschale, die einen meist noch flüssigen Metallkern umschließt. Aus der Kokille wird der zumindest teilerstarrte metallische Gießstrang an eine Strangführung ausgegeben, die den Gießstrang abtransportiert. In der Strangführung wird der Gießstrang in der Regel mit Transportrollen gestützt und transportiert.

In der Strangführung wird der Gießstrang weiter abgekühlt. Das Abkühlen des Gießstrangs in der Strangführung wird als Sekundärkühlen des Gießstrangs bezeichnet. Bei dem Sekundärkühlen wird ein Kühlmittel auf den Gießstrang ausgegeben. Als Kühlmittel wird beispielsweise eine Kühlflüssigkeit, typischerweise Wasser (so genannte "water only" Kühlung), oder ein Gemisch aus einer Flüssigkeit und einem Gas, typischerweise Luft (so genannte "air mist" Kühlung), verwendet.

Eine Stranggießanlage kann als Vertikalanlage oder als Bogenanlage ausgebildet sein. Eine Vertikalanlage weist eine vertikal verlaufende Strangführung auf. Unter einer Bogenanlage wird eine Stranggießanlage mit einer bogenförmigen Strangführung verstanden, mit der beispielsweise ein vertikal von der Kokille ausgegebener Gießstrang in eine horizontale Lage überführt wird.

Das Kühlmittel wird beim Sekundärkühlen eines Gießstrangs in der Regel mittels Kühldüsen auf den Gießstrang ausgegeben. Die Kühlwirkung der Kühldüsen hängt dabei von vielen Parametern ab, beispielsweise von der Höhe eines von den Kühldüsen ausgegebenen Kühlmittelstroms, von dem Abstand der Kühldüsen von dem Gießstrang, von der Verteilung der Kühldüsen entlang des Gießstrangs, von der Position der Kühldüsen in der Strangführung, von der Geschwindigkeit des Gießstrangs in der Strangführung, von den von den Kühldüsen erzeugten Kühlmittelverteilungen auf dem Gießstrang und von der Kühlmitteltemperatur. Über die genauen Auswirkungen der einzelnen Parameter und deren Zusammenwirken ist bisher relativ wenig bekannt, so dass eine zuverlässige quantitative Vorhersage der Kühlwirkung der Kühldüsen anhand der Parameter nicht möglich ist. Um die Kühlwirkung der Kühldüsen zu ermitteln und zu verbessern, sind daher Messungen der Kühlwirkung in Abhängigkeit von den Parametern erforderlich. Derartige Messungen mit ausreichender Aussagekraft sind jedoch an einer realen Stranggießanlage aufgrund der hohen Temperatur des Gießstrangs nicht möglich.

Der Erfindung liegt die Aufgabe zugrunde, einen Teststand für ein Sekundärkühlen eines Gießstrangs in einer Stranggießanlage anzugeben, der es ermöglicht, die Kühlwirkung von Kühldüsen in Abhängigkeit von verschiedenen Parametern zu ermitteln.

Die Aufgabe wird erfindungsgemäß mit einem Teststand mit den Merkmalen des Anspruchs 1 und mit einem Verfahren mit den Merkmalen des Anspruchs 15 gelöst.

Vorteilhafte Ausgestaltungen der Erfindung sind Gegenstand der Unteransprüche.

Ein erfindungsgemäßer Teststand für ein Sekundärkühlen eines Gießstrangs in einer Stranggießanlage umfasst
- einen um eine Schwenkachse schwenkbaren Schwenkrahmen,
- wenigstens eine Düsenhalterung für eine Kühldüse, die sowohl parallel zu der Schwenkachse als auch in und entgegen einer Verschieberichtung, die senkrecht zu der Schwenkachse ist, verschiebbar an dem Schwenkrahmen angeordnet ist, und
- einen in und entgegen einer Verfahrrichtung, die senkrecht zu der Schwenkachse und der Verschieberichtung ist, linear verfahrbar an dem Schwenkrahmen gelagerten Verfahrtisch mit einer Tischoberfläche, die senkrecht zu der Verschieberichtung ist und einen in einer Heizposition des Verfahrtisches beheizbaren Heizbereich aufweist,
- wobei jede Düsenhalterung und der Verfahrtisch derart relativ zueinander an dem Schwenkrahmen angeordnet sind, dass der Heizbereich durch Verfahren des Verfahrtisches durch einen Wirkbereich führbar ist, in den ein Kühlmittel von einer in der Düsenhalterung in einer Prüfposition angeordneten Kühldüse ausgebbar ist.

Ein erfindungsgemäßer Teststand ermöglicht eine realitätsnahe Nachbildung einer Strangführung einer Stranggießanlage im Bereich von Kühldüsen. Der Heizbereich des Verfahrtisches des Teststands bildet dabei den Gießstrang nach. Durch Beheizen kann der Heizbereich dabei auf eine realistische Temperatur des Gießstrangs erwärmt werden. Durch das Verfahren des Verfahrtisches kann die Bewegung des Gießstrangs durch die Strangführung nachgebildet werden. Durch Schwenken des Schwenkrahmens kann ein Winkel der Tischoberfläche (beziehungsweise eines Normalenvektors der Tischoberfläche) relativ zu der Richtung der Erdanziehungskraft eingestellt werden und somit ein Winkel des Gießstrangs (beziehungsweise eines Normalenvektors einer Oberfläche des Gießstrangs) relativ zu der Richtung der Erdanziehungskraft nachgebildet werden. Dadurch können beispielsweise verschiedene Winkel, die der Gießstrang in der bogenförmigen Strangführung einer Bogenanlage annimmt, nachgebildet werden und der Einfluss der Erdanziehungskraft auf die Kühlwirkung der Kühldüsen kann in Abhängigkeit von dem Winkel ermittelt werden. Durch die Verschiebbarkeit einer Kühldüse parallel zu der Schwenkachse kann eine Position der Kühldüse entlang der Breite des Gießstrangs (quer zu der Transportrichtung des Gießstrangs in der Strangführung) nachgebildet werden. Durch die Verschiebbarkeit einer Kühldüse in und entgegen der Verschieberichtung kann ein Abstand der Kühldüse von dem Gießstrang nachgebildet werden. Insgesamt ermöglicht ein erfindungsgemäßer Teststand eine Ermittlung der Kühlwirkung der Kühldüsen in einer Strangführung einer Stranggießanlage unter realitätsnahen Bedingungen und für verschiedene die Kühlwirkung beeinflussende Parameter.

Bei einer Ausgestaltung der Erfindung weist der Verfahrtisch wenigstens eine Probenbaugruppe auf, in der ein Probekörper derart anordenbar ist, dass eine Oberfläche des Probekörpers wenigstens einen Teil des Heizbereichs der Tischoberfläche bildet. Bei dieser Ausgestaltung der Erfindung wird der Heizbereich der Tischoberfläche von der Oberfläche eines Probekörpers oder mehrerer Probekörper gebildet, der oder die in einer Probenbaugruppe oder in mehreren Probenbaugruppen des Verfahrtisches angeordnet werden. Dadurch können Gießstränge mit verschiedenen Materialeigenschaften durch entsprechende Probekörper und verschiedene Breiten eines Gießstrangs durch eine entsprechende Anzahl und/oder Breite von Probekörpern nachgebildet werden.

Bei einer weiteren Ausgestaltung der Erfindung weist der Teststand wenigstens eine an dem Schwenkrahmen derart anordenbare Transportrollennachbildung auf, dass die Transportrollennachbildung die Tischoberfläche kontaktiert. Diese Ausgestaltung der Erfindung ermöglicht, Transportrollen, die einen Gießstrang in einer Strangführung stützen und transportieren, in dem Teststand nachzubilden und den Einfluss der Transportrollen auf die Kühlwirkung der Kühldüsen zu untersuchen.

Bei einer weiteren Ausgestaltung der Erfindung weist der Teststand eine Ausgabevorrichtung auf, mit der auf die Tischoberfläche in den Wirkbereich jeder in einer Düsenhalterung angeordneten Kühldüse zusätzlich zu dem von der Kühldüse ausgebbaren Kühlmittel eine einstellbare Zusatzmenge des Kühlmittels ausgebbar ist.

Die vorgenannte Ausgestaltung der Erfindung berücksichtigt, dass sich in dem Betrieb einer Stranggießanlage auf einer Oberfläche des Gießstrangs zwischen den Transportrollen der Strangführung Kühlmittel aufstauen kann, das die Kühlung des Gießstrangs und die Kühlwirkung der Kühldüsen beeinflusst. Derartiges aufgestautes Kühlmittel kann gemäß der vorgenannten Ausgestaltung der Erfindung durch die Ausgabe einer geeignet eingestellten Zusatzmenge von Kühlmittel auf die Tischoberfläche in den Wirkbereichen der Kühldüsen zusätzlich zu dem von den Kühldüsen ausgegebenem Kühlmittel nachgebildet werden.

Bei einer weiteren Ausgestaltung der Erfindung weist der Teststand wenigstens einen Oberflächentemperatursensor auf, der zum Messen einer Oberflächentemperatur des Heizbereichs der Tischoberfläche eingerichtet ist. Ein derartiger Oberflächentemperatursensor ist beispielsweise ein Thermoelement, das in einem Probekörper nahe dessen Oberfläche angeordnet ist, die Teil des Heizbereiches ist. Alternativ ist ein derartiger Oberflächentemperatursensor beispielsweise ein pyrometrischer Sensor. Durch die Messung der Oberflächentemperatur des Heizbereichs während des Verfahrens des Verfahrtisches kann die dabei erzielte Abkühlung des Heizbereichs erfasst werden.

Bei einer weiteren Ausgestaltung der Erfindung weist der Teststand wenigstens einen Durchflusssensor auf, der zum Messen eines Kühlmittelstroms eingerichtet ist, der von einer in einer Düsenhalterung angeordneten Kühldüse ausgegeben wird. Dies ermöglicht eine Ermittlung des Einflusses der von den Kühldüsen ausgegebenen Kühlmittelströme auf die Kühlwirkung der Kühldüsen.

Bei einer weiteren Ausgestaltung der Erfindung weist der Teststand wenigstens einen Kühlmitteltemperatursensor auf, der zum Messen einer Temperatur des Kühlmittels eingerichtet ist, das von einer in einer Düsenhalterung angeordneten Kühldüse ausgegeben wird. Dies ermöglicht eine Ermittlung des Einflusses der Temperatur des Kühlmittels auf die Kühlwirkung der Kühldüsen.

Bei einer weiteren Ausgestaltung der Erfindung weist der Teststand einen Schwenkantrieb auf, der zum Schwenken des Schwenkrahmens in eine einstellbare Schwenkposition eingerichtet ist. Beispielsweise ist der Schwenkantrieb als ein Synchronmotor mit einem nachgeschalteten Planetengetriebe ausgebildet.

Bei einer weiteren Ausgestaltung der Erfindung ist der Schwenkrahmen in einem Winkelbereich von wenigstens 180 Grad schwenkbar. Insbesondere ist der Winkelbereich beispielsweise derart ausgebildet, dass die Tischoberfläche durch Schwenken des Schwenkrahmens um 180 Grad zwischen zwei horizontalen Lagen und allen Lagen dazwischen schwenkbar ist. Dadurch können sowohl vertikale als auch horizontale Lagen des Gießstrangs nachgebildet werden, sowie alle Lagen dazwischen, die beispielsweise von einem Gießstrang in einer bogenförmigen Strangführung durchlaufen werden.

Bei einer weiteren Ausgestaltung der Erfindung weist der Teststand einen Verfahrtischantrieb auf, der zum Verfahren des Verfahrtisches in und entgegen der Verfahrrichtung mit einer einstellbaren Verfahrgeschwindigkeit eingerichtet ist. Beispielsweise weist der Verfahrtischantrieb einen Synchronmotor zum Linearantrieb des Verfahrtisches auf. Durch eine einstellbare Verfahrgeschwindigkeit können verschiedene Transportgeschwindigkeiten eines Gießstrangs in einer Strangführung nachgebildet werden.

Bei einer weiteren Ausgestaltung der Erfindung weist der Teststand wenigstens eine an dem Schwenkrahmen angeordnete Heizhaube auf, die zwischen einer Aktivstellung, in der die Heizhaube in der Heizposition des Verfahrtisches an dem Heizbereich des Verfahrtisches anliegt und der Heizbereich mit der Heizhaube beheizbar ist, und einer Passivstellung, in der die Heizhaube von dem Verfahrtisch beabstandet ist, bewegbar ist. Ferner kann der Teststand einen Heizhaubenantrieb aufweisen, mit dem wenigstens eine Heizhaube zwischen der Aktivstellung und der Passivstellung bewegbar ist.

Gemäß der vorgenannten Ausgestaltung der Erfindung ist der Heizbereich des Verfahrtisches durch wenigstens eine Heizhaube beheizbar, die in der Heizposition des Verfahrtisches an den Heizbereich zu dessen Beheizen anlegbar ist. Jede Heizhaube ist ferner in eine Passivstellung bewegbar, in der sie von dem Verfahrtisch beabstandet ist, um in dem Prüfbetrieb das Verfahren des Verfahrtisches nicht zu behindern. Ein Heizhaubenantrieb zum Bewegen wenigstens einer Heizhaube ist beispielsweise als ein pneumatischer Antrieb ausgebildet, mit dem wenigstens eine Heizhaube von dem Verfahrtisch weg und zu dem Verfahrtisch hin bewegbar ist.

Bei einer weiteren Ausgestaltung der Erfindung weist der Teststand für jede Düsenhalterung einen ersten Düsenhalterungsantrieb auf, der zum Verschieben der Düsenhalterung parallel zur Schwenkachse eingerichtet ist. Der erste Düsenhalterungsantrieb weist beispielsweise eine Zahnriemenachse und einen Schrittmotor mit Haltebremse auf.

Bei einer weiteren Ausgestaltung der Erfindung weist der Teststand wenigstens einen zweiten Düsenhalterungsantrieb auf, der zum Verschieben wenigstens einer Düsenhalterung in und entgegen der Verschieberichtung eingerichtet ist. Der zweite Düsenhalterungsantrieb weist beispielsweise eine Spindelachse und einen Schrittmotor auf.

Bei dem erfindungsgemäßen Verfahren zum Betreiben eines erfindungsgemäßen Teststands werden zunächst
- wenigstens eine Kühldüse in einer Düsenhalterung angeordnet und mittels Verschieben der Düsenhalterung parallel zu der Schwenkachse und/oder in oder entgegen der Verschieberichtung in eine Prüfposition gebracht, so dass der Verfahrtisch in eine Position verfahrbar ist, in der von der Kühldüse in deren Prüfposition Kühlmittel auf den Heizbereich des Verfahrtisches ausgebbar ist,
- der Schwenkrahmen in eine Schwenkposition geschwenkt und
- der Heizbereich der Tischoberfläche auf eine Prüftemperatur aufgeheizt.
- Danach werden gleichzeitig von jeder in einer Düsenhalterung angeordneten Kühldüse ein Kühlmittel ausgegeben und der Verfahrtisch verfahren, so dass der Heizbereich des Verfahrtisches durch den Wirkbereich jeder in einer Düsenhalterung angeordneten Kühldüse geführt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine erste schematische Schnittdarstellung eines Ausführungsbeispiels eines Teststands,
FIG 2 eine zweite schematische Schnittdarstellung des in Figur 1 gezeigten Teststands,
FIG 3 ein Ablaufdiagramm eines Verfahrens zum Betreiben eines in den Figuren 1 und 2 gezeigten Teststands.

Einander entsprechende Teile sind in den Figuren mit denselben Bezugszeichen versehen.

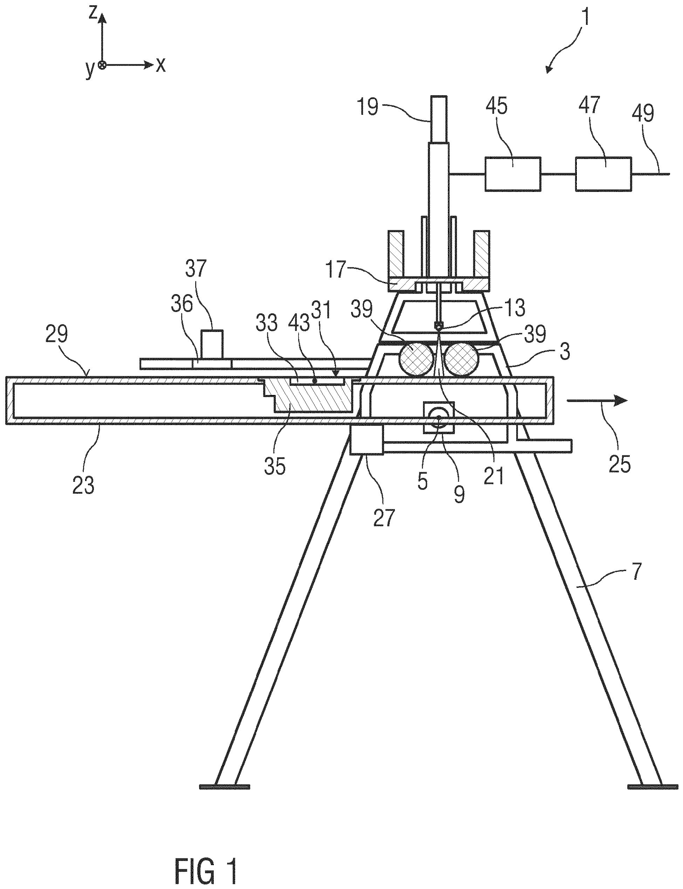

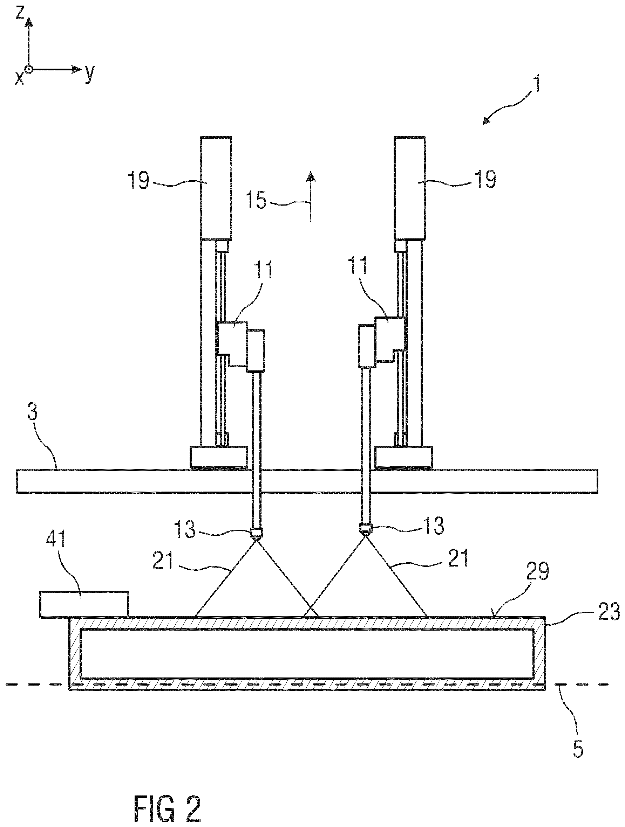

Figur 1 (FIG 1) und Figur 2 (FIG 2) zeigen schematisch ein Ausführungsbeispiel eines Teststands 1 für ein Sekundärkühlen eines Gießstrangs in einer Stranggießanlage. Dabei zeigt Figur 1 eine erste Schnittdarstellung des Teststands 1 in einer ersten Schnittebene, die eine XZ-Ebene eines kartesischen Koordinatensystems mit Koordinaten X, Y, Z ist. Figur 2 zeigt eine zweite Schnittdarstellung des Teststands 1 in einer zweiten Schnittebene, die eine YZ-Ebene des Koordinatensystems ist.

Der Teststand 1 umfasst unter anderem einen Schwenkrahmen 3, der um eine Schwenkachse 5 schwenkbar an einem Grundgestell 7 angeordnet ist. Die Schwenkachse 5 verläuft parallel zu der Y-Achse des Koordinatensystems. Zum Schwenken des Schwenkrahmens 3 weist der Teststand 1 einen Schwenkantrieb 9 auf, mit dem der Schwenkrahmen 3 in eine einstellbare Schwenkposition schwenkbar ist. Beispielsweise ist der Schwenkantrieb 9 als ein Synchronmotor mit einem nachgeschalteten Planetengetriebe ausgebildet. Um den Schwenkrahmen 3 in einer Schwenkposition sicher zu fixieren, können ferner Bremsen vorgesehen sein. Der Schwenkantrieb 9 ist beispielsweise auf einer ersten Seite des Schwenkrahmens 3 an dem Grundgestell 7 angeordnet. Auf einer der ersten Seite gegenüberliegenden zweiten Seite ist der Schwenkrahmen 3 mittels eines Lagers an dem Grundgestell 7 aufgehängt.

Der Teststand 1 umfasst ferner zwei Düsenhalterungen 11 für jeweils eine Kühldüse 13. Jede Düsenhalterung 11 ist sowohl parallel zu der Schwenkachse 5 als auch in und entgegen einer Verschieberichtung 15, die senkrecht zu der Schwenkachse 5 ist, verschiebbar an dem Schwenkrahmen 3 angeordnet. Zum Verschieben einer Düsenhalterung 11 parallel zur Schwenkachse 5 weist der Teststand 1 einen an dem Schwenkrahmen 3 angeordneten ersten Düsenhalterungsantrieb 17 auf. Jeder erste Düsenhalterungsantrieb 17 weist beispielsweise eine Zahnriemenachse und einen Schrittmotor mit Haltebremse auf. Zum Verschieben einer Düsenhalterung 11 in und entgegen der Verschieberichtung 15 weist der Teststand 1 einen an dem Schwenkrahmen 3 angeordneten zweiten Düsenhalterungsantrieb 19 auf. Jeder zweite Düsenhalterungsantrieb 19 weist beispielsweise eine Spindelachse und einen Schrittmotor auf.

Der Schwenkrahmen 3 ist durch den Schwenkantrieb 9 in einem Winkelbereich von wenigstens 180 Grad schwenkbar, so dass der Schwenkrahmen 3 in eine in den Figuren 1 und 2 gezeigte erste Schwenkposition, in der die Verschieberichtung 15 vertikal nach oben gerichtet ist, in eine zweite Schwenkposition, in der die Verschieberichtung 15 vertikal nach unten gerichtet ist, und in jede zwischen der ersten Schwenkposition und der zweiten Schwenkposition liegende Schwenkposition schwenkbar ist. Durch jede in einer Düsenhalterungen 11 angeordnete Kühldüse 13 ist ein Kühlmittelstrahl 21 eines Kühlmittels entgegen der Verschieberichtung 15 ausgebbar. In der ersten Schwenkposition ist durch die Kühldüsen 13 somit jeweils ein Kühlmittelstrahl 21 eines Kühlmittels vertikal nach unten ausgebbar. In der zweiten Schwenkposition ist durch die Kühldüsen 13 jeweils ein Kühlmittelstrahl 21 des Kühlmittels vertikal nach oben ausgebbar.

Der Teststand 1 weist ferner einen Verfahrtisch 23 auf, der in und entgegen einer Verfahrrichtung 25, die senkrecht zu der Schwenkachse 5 und der Verschieberichtung 15 ist, linear verfahrbar an dem Schwenkrahmen 3 gelagert ist. Zum Verfahren des Verfahrtisches 23 in und entgegen der Verfahrrichtung 25 weist der Teststand 1 einen Verfahrtischantrieb 27 auf, der zum Verfahren des Verfahrtisches 23 mit einer einstellbaren Verfahrgeschwindigkeit eingerichtet ist. Beispielsweise weist der Verfahrtischantrieb 27 einen Synchronmotor zum Linearantrieb des Verfahrtisches 23 und eine integrierte Haltebremse auf.

Der Verfahrtisch 23 weist eine Tischoberfläche 29 auf, die senkrecht zu der Verschieberichtung 15 ist und einen in einer Heizposition des Verfahrtisches 23 beheizbaren Heizbereich 31 aufweist. Der Heizbereich 31 wird von einer Oberfläche wenigstens eines Probekörpers 33 gebildet, der in einer Probenbaugruppe 35 des Verfahrtisches 23 angeordnet ist.

Jede Düsenhalterung 11 und der Verfahrtisch 23 sind derart relativ zueinander an dem Schwenkrahmen 23 angeordnet, dass der Heizbereich 31 durch Verfahren des Verfahrtisches 23 durch einen Wirkbereich führbar ist, in den das Kühlmittel von einer in der Düsenhalterung 11 in einer Prüfposition angeordneten Kühldüse 13 ausgebbar ist.

Der Teststand 1 umfasst ferner wenigstens eine an dem Schwenkrahmen 23 angeordnete Heizhaube 36 zum Beheizen des Heizbereichs 31 in dessen Heizposition. Jede Heizhaube 36 ist zwischen einer Aktivstellung und einer in Figur 1 gezeigten Passivstellung bewegbar. In der Aktivstellung liegt die Heizhaube 36 in der Heizposition des Verfahrtisches 23 an dem Heizbereich 31 des Verfahrtisches 23 an und der Heizbereich 31 ist mit der Heizhaube 36 beheizbar. In der Passivstellung ist die Heizhaube 36 von dem Verfahrtisch 23 beabstandet. Der Teststand 1 umfasst ferner einen Heizhaubenantrieb 37, mit dem jede Heizhaube 36 zwischen der Aktivstellung und der Passivstellung bewegbar ist. Der Heizhaubenantrieb 37 ist beispielsweise als ein pneumatischer Antrieb ausgebildet, mit dem jede Heizhaube 36 von dem Verfahrtisch 23 weg und zu dem Verfahrtisch 23 hin bewegbar ist.

Der Teststand 1 umfasst ferner zwei Transportrollennachbildungen 39, die an dem Schwenkrahmen 23 derart anordenbar sind, dass die Transportrollennachbildungen 39 die Tischoberfläche 29 kontaktieren.

Der Teststand 1 weist außerdem eine Ausgabevorrichtung 41 auf, mit der auf die Tischoberfläche 29 in den Wirkbereich jeder in einer Düsenhalterung angeordneten Kühldüse 13 zusätzlich zu dem von der Kühldüse 13 ausgebbaren Kühlmittel eine einstellbare Zusatzmenge des Kühlmittels ausgebbar ist.

Des Weiteren weist der Teststand 1 wenigstens einen Oberflächentemperatursensor 43 auf, der zum Messen einer Oberflächentemperatur des Heizbereichs 31 der Tischoberfläche 29 eingerichtet ist. In dem in Figuren 1 und 2 gezeigten Ausführungsbeispiel ist ein derartiger Oberflächentemperatursensor 43 ein Thermoelement, das in einem Probekörper 33 nahe dessen Oberfläche angeordnet ist, die Teil des Heizbereiches 31 ist. In anderen Ausführungsbeispielen kann ein derartiger Oberflächentemperatursensor 43 beispielsweise ein pyrometrischer Sensor sein.

Der Teststand 1 umfasst ferner wenigstens einen Durchflusssensor 45 und wenigstens einen Kühlmitteltemperatursensor 47. Der Durchflusssensor 45 ist zum Messen eines Kühlmittelstroms eingerichtet, der von einer in einer Düsenhalterung 11 angeordneten Kühldüse 13 ausgegeben wird. Der Kühlmitteltemperatursensor 47 ist zum Messen einer Temperatur des Kühlmittels eingerichtet, das von einer in einer Düsenhalterung 11 angeordneten Kühldüse 13 ausgegeben wird. Beispielsweise sind ein Durchflusssensor 45 und ein Kühlmitteltemperatursensor 47 in einer Kühlmittelzuleitung 49 angeordnet, mit der einer Kühldüse 13 das Kühlmittel zuleitbar ist.

Das in den Figuren 1 und 2 gezeigte Ausführungsbeispiel eines Teststands 1 kann auf verschiedene Arten zu anderen Ausführungsbeispielen abgewandelt werden. Beispielsweise kann der Teststand 1 eine andere Anzahl von Düsenhalterungen 11, insbesondere nur eine Düsenhalterung 11, aufweisen.

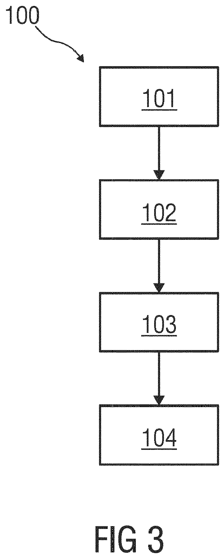

Figur 3 (FIG 3) zeigt ein Ablaufdiagramm 100 eines erfindungsgemäßen Verfahrens mit Verfahrensschritten 101 bis 104 zum Betreiben eines in den Figuren 1 und 2 gezeigten Teststands 1.

In einem ersten Verfahrensschritt 101 wird wenigstens eine Kühldüse 13 in einer Düsenhalterung 11 angeordnet und mittels Verschieben der Düsenhalterung 13 parallel zu der Schwenkachse 5 und/oder in oder entgegen der Verschieberichtung 15 in eine Prüfposition gebracht, so dass der Verfahrtisch 13 in eine Position verfahrbar ist, in der von der Kühldüse 13 in deren Prüfposition Kühlmittel auf den Heizbereich 31 des Verfahrtisches 13 ausgebbar ist.

In einem zweiten Verfahrensschritt 102 wird der Schwenkrahmen 3 in eine Schwenkposition geschwenkt.

In einem dritten Verfahrensschritt 103 wird der Heizbereich 31 der Tischoberfläche 29 in der Heizposition auf eine Prüftemperatur aufgeheizt.

In einem vierten Verfahrensschritt 104 werden gleichzeitig von jeder in einer Düsenhalterung 11 angeordneten Kühldüse 13 ein Kühlmittel ausgegeben und der Verfahrtisch 23 verfahren, so dass der Heizbereich 31 des Verfahrtisches 23 durch den Wirkbereich jeder in einer Düsenhalterung 11 angeordneten Kühldüse 13 geführt wird. Dabei werden die Oberflächentemperatur des Heizbereichs 31 der Tischoberfläche 29, die von den Kühldüsen 13 ausgegebenen Kühlmittelströme und die Temperatur des von den Kühldüsen 13 ausgegebenen Kühlmittels gemessen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Teststand
- 3: Schwenkrahmen
- 5: Schwenkachse
- 7: Grundgestell
- 9: Schwenkantrieb
- 11: Düsenhalterung
- 13: Kühldüse
- 15: Verschieberichtung
- 17: erster Düsenhalterungsantrieb
- 19: zweiter Düsenhalterungsantrieb
- 21: Kühlmittelstrahl
- 23: Verfahrtisch
- 25: Verfahrrichtung
- 27: Verfahrtischantrieb
- 29: Tischoberfläche
- 31: Heizbereich
- 33: Probekörper
- 35: Probenbaugruppe
- 36: Heizhaube
- 37: Heizhaubenantrieb
- 39: Transportrollennachbildung
- 41: Ausgabevorrichtung
- 43: Oberflächentemperatursensor
- 45: Durchflusssensor
- 47: Kühlmitteltemperatursensor
- 49: Kühlmittelzuleitung
- 100: Ablaufdiagramm
- 101 bis 104: Verfahrensschritt
- X, Y, Z: kartesische Koordinate

## Patentansprüche

1. Teststand (1) für ein Sekundärkühlen eines Gießstrangs in einer Stranggießanlage, der Teststand (1) umfassend
- einen um eine Schwenkachse (5) schwenkbaren Schwenkrahmen (3),
- wenigstens eine Düsenhalterung (11) für eine Kühldüse (13), die sowohl parallel zu der Schwenkachse (5) als auch in und entgegen einer Verschieberichtung (15), die senkrecht zu der Schwenkachse (5) ist, verschiebbar an dem Schwenkrahmen (3) angeordnet ist, und
- einen in und entgegen einer Verfahrrichtung (25), die senkrecht zu der Schwenkachse (5) und der Verschieberichtung (15) ist, linear verfahrbar an dem Schwenkrahmen (3) gelagerten Verfahrtisch (23) mit einer Tischoberfläche (29), die senkrecht zu der Verschieberichtung (15) ist und einen in einer Heizposition des Verfahrtisches (23) beheizbaren Heizbereich (31) aufweist,
- wobei jede Düsenhalterung (11) und der Verfahrtisch (23) derart relativ zueinander an dem Schwenkrahmen (3) angeordnet sind, dass der Heizbereich (31) durch Verfahren des Verfahrtisches (23) durch einen Wirkbereich führbar ist, in den ein Kühlmittel von einer in der Düsenhalterung (11) in einer Prüfposition angeordneten Kühldüse (13) ausgebbar ist.

2. Teststand (1) nach Anspruch 1, wobei der Verfahrtisch (23) wenigstens eine Probenbaugruppe (35) aufweist, in der ein Probekörper (33) derart anordenbar ist, dass eine Oberfläche des Probekörpers (33) wenigstens einen Teil des Heizbereichs (31) der Tischoberfläche (29) bildet.

3. Teststand (1) nach Anspruch 1 oder 2 mit wenigstens einer an dem Schwenkrahmen (3) derart anordenbaren Transportrollennachbildung (39), dass sie die Tischoberfläche (29) kontaktiert.

4. Teststand (1) nach einem der vorhergehenden Ansprüche mit einer Ausgabevorrichtung (41), mit der auf die Tischoberfläche (29) in den Wirkbereich jeder in einer Düsenhalterung (11) angeordneten Kühldüse (13) zusätzlich zu dem von der Kühldüse (13) ausgebbaren Kühlmittel eine einstellbare Zusatzmenge des Kühlmittels ausgebbar ist.

5. Teststand (1) nach einem der vorhergehenden Ansprüche mit wenigstens einem Oberflächentemperatursensor (43), der zum Messen einer Oberflächentemperatur des Heizbereichs (31) der Tischoberfläche (29) eingerichtet ist.

6. Teststand (1) nach einem der vorhergehenden Ansprüche mit wenigstens einem Durchflusssensor (45), der zum Messen eines Kühlmittelstroms eingerichtet ist, der von einer in einer Düsenhalterung (11) angeordneten Kühldüse (13) ausgegeben wird.

7. Teststand (1) nach einem der vorhergehenden Ansprüche mit wenigstens einem Kühlmitteltemperatursensor (47), der zum Messen einer Temperatur des Kühlmittels eingerichtet ist, das von einer in einer Düsenhalterung (11) angeordneten Kühldüse (13) ausgegeben wird.

8. Teststand (1) nach einem der vorhergehenden Ansprüche mit einem Schwenkantrieb (9), der zum Schwenken des Schwenkrahmens (3) in eine einstellbare Schwenkposition eingerichtet ist.

9. Teststand (1) nach einem der vorhergehenden Ansprüche wobei der Schwenkrahmen (3) in einem Winkelbereich von wenigstens 180 Grad schwenkbar ist.

10. Teststand (1) nach einem der vorhergehenden Ansprüche mit einem Verfahrtischantrieb (27), der zum Verfahren des Verfahrtisches (23) in und entgegen der Verfahrrichtung (25) mit einer einstellbaren Verfahrgeschwindigkeit eingerichtet ist.

11. Teststand (1) nach einem der vorhergehenden Ansprüche mit wenigstens einer an dem Schwenkrahmen (3) angeordneten Heizhaube (36), die zwischen einer Aktivstellung, in der die Heizhaube (36) in der Heizposition des Verfahrtisches (23) an dem Heizbereich (31) des Verfahrtisches (23) anliegt und der Heizbereich (31) mit der Heizhaube (36) beheizbar ist, und einer Passivstellung, in der die Heizhaube (36) von dem Verfahrtisch (23) beabstandet ist, bewegbar ist.

12. Teststand (1) nach Anspruch 11, mit einem Heizhaubenantrieb (37), mit dem wenigstens eine Heizhaube (36) zwischen der Aktivstellung und der Passivstellung bewegbar ist.

13. Teststand (1) nach einem der vorhergehenden Ansprüche, der für jede Düsenhalterung (11) einen ersten Düsenhalterungsantrieb (17) aufweist, der zum Verschieben der Düsenhalterung (11) parallel zur Schwenkachse (5) eingerichtet ist.

14. Teststand (1) nach einem der vorhergehenden Ansprüche mit wenigstens einem zweiten Düsenhalterungsantrieb (19), der zum Verschieben wenigstens einer Düsenhalterung (11) in und entgegen der Verschieberichtung (15) eingerichtet ist.

15. Verfahren zum Betreiben eines gemäß einem der vorhergehenden Ansprüche ausgebildeten Teststands (1), wobei
- wenigstens eine Kühldüse (13) in einer Düsenhalterung (11) angeordnet und mittels Verschieben der Düsenhalterung (11) parallel zu der Schwenkachse (5) und/oder in oder entgegen der Verschieberichtung (15) in eine Prüfposition gebracht wird, so dass der Verfahrtisch (23) in eine Position verfahrbar ist, in der von der Kühldüse (13) in deren Prüfposition Kühlmittel auf den Heizbereich (31) des Verfahrtisches (23) ausgebbar ist,
- der Schwenkrahmen (3) in eine Schwenkposition geschwenkt wird,
- der Heizbereich (31) der Tischoberfläche (29) auf eine Prüftemperatur aufgeheizt wird und
- danach gleichzeitig von jeder in einer Düsenhalterung (11) angeordneten Kühldüse (13) ein Kühlmittel ausgegeben wird und der Verfahrtisch (23) verfahren wird, so dass der Heizbereich (31) des Verfahrtisches (23) durch den Wirkbereich jeder in einer Düsenhalterung (11) angeordneten Kühldüse (13) geführt wird.
